# EUROPÄISCHE PATENTSCHRIFT

(11) **EP 2 390 522 B1**
(45) Veröffentlichungstag und Bekanntmachung des Hinweises auf die Patenterteilung: **23.12.2015**
(21) Anmeldenummer: 11004173.8
(22) Anmeldetag: 20.05.2011
(51) Int. Cl.: F16D 23/14

(54) **Ausrücklageranordnung**
Release bearing assembly
Agencement de butée de débrayage

(30) Priorität: 27.05.2010 DE 102010021790
(43) Veröffentlichungstag der Anmeldung: 30.11.2011
(73) Patentinhaber: Schaeffler Technologies AG & Co. KG, 91074 Herzogenaurach (DE)
(72) Erfinder: Silva, Leonardo, 18016-180 Sorocaba (BR); Domingues, Everton, 18071-007 Sorocaba (BR)

(56) Entgegenhaltungen:
- EP-A1- 0 360 650
- EP-A2- 0 190 970
- DE-A1-102007 034 844
- US-A- 4 186 828
- US-A- 5 598 912

## Beschreibung

### 1.2.2 Gebiet der Erfindung

Die Erfindung betrifft eine Ausrücklageranordnung für eine insbesondere hydraulisch betätigbare Kupplung, umfassend ein Ausrücklager mit einem Innenring, der mittels eines an einem Befestigungsring fixierten Halterings an dem Befestigungsring verspannt ist.

### 1.3 Hintergrund der Erfindung

Eine solche Ausrücklageranordnung bildet das Verbindungsglied zwischen der rotierenden Kupplungsdruckplatte auf der Motorseite und dem feststehenden Ausrückmechanismus auf der Getriebeseite. Die Ausrücklageranordnung umfasst ein Ausrücklager, in der Regel ein Wälzlager, mit einem Außenring und einem Innenring. Der Innenring ist mittels eines ringförmigen Federelements an einem Befestigungsring festgelegt, wie beispielsweise aus US 7,117,986 bekannt. Dieser Befestigungsring dient bei hydraulisch betätigbaren Kupplungen respektive Ausrücklageranordnungen als axial beweglicher Ringkolben, dessen axiale Stellbewegung hydraulisch gesteuert erfolgt.

Der Haltering ist, wie beispielsweise aus US 7,117,986 bekannt, an dem Befestigungsring durch eine Rastverbindung fixiert. Hierzu sind an dem Haltering mehrere radial nach außen vorspringende Federzungen mit Rastnasen vorgesehen, die zur Montage in den Befestigungsring geschoben werden und dort an radial nach innen gerichteten Rastabschnitten verrasten. Hierüber wird das Ausrücklager über seinen Innenring, gegebenenfalls unter Zwischenschaltung eines Federrings, fixiert, also im Falle einer hydraulischen Ausrücklageranordnung fest mit dem Ringkolben verbunden. Eine Demontage der Ausrücklageranordnung, beispielsweise aufgrund eines Defekts des Ausrücklagers, ist aufgrund der gegebenen Rastverbindung nicht möglich. Denn die Rastverbindung kann, da im Inneren des Befestigungsrings, also des hülsenartigen Ringkolbens gelegen, nicht gelöst werden. Infolgedessen ist ein Austausch der kompletten Ausrücklageranordnung erforderlich, wenngleich lediglich beispielsweise das Ausrücklager zu tauschen wäre. '

### 1.4 Zusammenfassung der Erfindung

Der Erfindung liegt damit das Problem zugrunde, eine Ausrücklageranordnung anzugeben, die im Bedarfsfall auch demontiert werden kann.

Zur Lösung dieses Problems ist bei einer Ausrücklageranordnung der eingangs genannten Art erfindungsgemäß vorgesehen, dass der Haltering durch Drehen in eine am Befestigungsring axial bewegungsgesicherte Position bringbar ist.

Bei der erfindungsgemäßen Ausrücklageranordnung erfolgt die Fixierung des Halterings am Befestigungsring nicht mehr durch eine radial wirkende Rastverbindung, sondern durch einen durch Verdrehen des Halterings relativ zum Befestigungsring realisierten axialen Hinter- oder Eingriff. Der Haltering wird, nachdem das Ausrücklager auf den Befestigungsring aufgeschoben ist und gegen einen Radialflansch anliegt, auf den Befestigungsring gesetzt und relativ zu diesem verdreht. Hierbei kommt es zu einem Eingriff eines oder mehrerer halteringseitig vorgesehener Eingriffsabschnitte mit einem oder mehreren befestigungsringseitig vorgesehenen Eingriffsabschnitten, so dass sich ein axial wirkender Hintergriff ergibt, der eine axiale Bewegungssicherung, also eine Festlegung des Halterings am Befestigungsring ermöglicht. Hierüber kann auf einfache Weise der Innenring am Befestigungsring fixiert werden.

Gleichermaßen möglich und einfach ist aber auch die Demontage. Denn hierzu ist der Haltering lediglich durch Drehen aus seiner axial gesicherten Position zurück in die Löseposition zu bringen, woraufhin er vom Befestigungsring abgezogen und mithin auch das Ausrücklager abgenommen werden kann. Eine Demontage ist folglich zwecks Austausch eines defekten Bauteils oder Ähnlichem bei der erfindungsgemäßen Ausrücklageranordnung ohne Weiteres möglich.

Zur Ermöglichung der axialen Festlegung durch Verdrehen ist gemäß einer vorteilhaften Weiterbildung der Erfindung am Befestigungsring ein Außengewinde vorgesehen, auf das der Haltering mit einem Innengewinde aufschraubbar ist. D. h., dass hier eine axiale Festlegung und damit Befestigung des Halterings am Befestigungsring durch Verschrauben realisiert ist. Die jeweiligen Gewinde müssen keine bestimmte Anzahl an Windungen aufweisen, es reichen bereits nur sehr kurze Gewindeabschnitte mit geringer Steigung aus, um eine sichere Fixierung zu ermöglichen. Insbesondere, wenn zwischen Haltering und den radial nach innen weisenden Innenring des Ausrücklagers ein Federring zwischengeordnet ist, wird eine feste, axiale Verspannung realisiert, über die die Axialsicherung noch weiter verbessert wird.

Alternativ zur Realisierung der lösbaren Verbindungsmöglichkeit über ineinandergreifende Gewinde ist es auch denkbar, am Befestigungsring mehrere umfangmäßig voneinander beabstandete radial nach außen ragende Vorsprünge vorzusehen, die von mehreren am Haltering vorgesehenen umfangsmäßig voneinander beabstandeten und radial nach innen ragenden Vorsprüngen beim Drehen hintergriffen werden. Vorgesehen sind beispielsweise jeweils vier um etwas weniger als 45° umlaufende Radialvorsprünge jeweils am Halte- und am Befestigungsring. Beim Aufschieben des Halterings auf den Befestigungsring ist dieser so zu positionieren, dass seine Vorsprünge zunächst zwischen zwei benachbarten Vorsprüngen des Befestigungsrings hindurchgeschoben werden können, woraufhin die Verdrehung erfolgt, im Rahmen welcher die Halteringvorsprünge hinter die Befestigungsringvorsprünge greifen. Dabei ist es selbstverständlich denkbar, dass die aneinander anliegenden Flächen der Vorsprünge geringe Steigungen aufweisen, so dass beim Verdrehen automatisch auch eine axiale Bewegung des Halterings relativ zum Befestigungsring erwirkt wird, die eine noch bessere Verspannung ermöglicht. Denkbar ist es in diesem Zusammenhang auch, an den aneinanderliegenden Flächen eine leichte Raststellung zu realisieren, wenn der Haltering seine Endposition erreicht hat, wobei diese Rastposition selbstverständlich beim Zurückdrehen wieder geöffnet werden kann.

Wie bereits beschrieben ist es zweckmäßig, wenn zwischen dem Haltering und dem Innenring ein Spannelement, also beispielsweise ein Feder- oder Gummiring, angeordnet ist, da hierüber eine axiale Spannkraft zwischen Haltering und Innenring erzeugt wird, die sich auch vorteilhaft auf die axiale Festlegung des Halterings am Befestigungsring auswirkt. Dieses Spannelement kann ein separates Bauteil in Form eines zwischengesetzten Feder- oder Gummirings sein. Denkbar ist aber auch, dass das Spannelement insbesondere in Form eines Federflansches am Haltering angeformt ist, wobei der Federflansch am Innenring angreift. Der Haltering ist bevorzugt aus Kunststoff gefertigt, so dass ohne Weiteres ein federnder Flanschabschnitt angeformt werden kann. Ein solcher kann natürlich auch bei einer Ausführung des Halterings aus Metall realisiert werden.

Grundsätzlich besteht die Möglichkeit, die Fixierung des Ausrücklagers am Befestigungsring allein durch den einen Haltering durch Verdrehung desselben zu erwirken. Hierzu ist sicherzustellen, dass der Haltering manuell oder mechanisch gut gegriffen werden kann, um ihn auf den Befestigungsring aufzudrehen. Dies wiederum setzt eine hinreichende Größe und Form des Halterings voraus, da dieser axial gesehen aus dem Ausrücklager herausragen und gegebenenfalls auch radial etwas aufgeweitet werden muss, um ihn zu greifen. Dies kann mitunter eine etwas komplexe Form des Halterings bedeuten. Um den Haltering gleichwohl möglichst klein und einfach zu gestalten, ihn aber dennoch einfach handhabbar auszuführen, sieht eine zweckmäßige Weiterbildung der Erfindung vor, dass dem Haltering ein Drehring zugeordnet ist, der mit dem Haltering zum Drehen desselben zumindest temporär bewegungskoppelbar ist. Gemäß dieser Erfindungsausgestaltung ist also die "Befestigungseinheit" zur Fixierung des Ausrücklagers zweiteilig bestehend aus dem eigentlich fixierenden Haltering sowie dem ihm zugeordneten Drehring vorgesehen. Der Drehring wirkt mit dem Haltering zusammen, er ist mit ihm zumindest temporär bewegungskoppelbar, kann also zumindest zeitweise und bei Bedarf mit ihm mechanisch in Eingriff gebracht werden, so dass durch Drehen des Drehrings auch der Haltering verdreht wird. Der Drehring ist bevorzugt natürlich unverlierbar mit dem Haltering gekoppelt, wobei aber grundsätzlich durchaus auch ein Ansetzen des Drehrings am Haltering dann, wenn eine Demontage erforderlich ist, denkbar ist, mithin also der Drehring nicht unverlierbar mit dem Haltering verbunden ist, sondern als separates Werkzeug angesetzt wird.

Wie beschrieben ist eine unverlierbare Anbindung des Drehrings am Haltering jedoch bevorzugt, was erfindungsgemäß auf einfache Weise dadurch realisiert sein kann, dass der Drehring den Haltering außenseitig über- und zur Fixierung mit Axialspiel hintergreift. Der Drehring ist also letztlich auf den Haltering aufgeschnappt, jedoch axial relativ zum Haltering etwas bewegbar. Diese axiale Bewegung ermöglicht die temporäre Bewegungskopplung, d. h., dass der Drehring in der vom Haltering entfernten Stellung beispielsweise nicht mit dem Haltering mechanisch gekoppelt ist, also leer dreht, während er dann, wenn er an den Haltering herangeschoben und das kurze Axialspiel überbrückt ist, mit ihm mechanisch gekoppelt ist. Hierzu ist es denkbar, wenn am Drehring mehrere Vorsprünge vorgesehen sind, die zum Drehen durch Drücken des Drehrings gegen den Haltering im lösbaren Eingriff mit am Haltering vorgesehenen Mitnehmervorsprüngen bringbar sind. Wird also der Drehring gegen den Haltering gedrückt, so greifen die drehringseitigen Vorsprünge an halteringseitigen Mitnehmervorsprüngen an. Wird nun der Drehring gedreht, so wird auch der Haltering über die aneinander angreifenden Vorsprünge bewegt.

Die Vorsprünge und Mitnehmervorsprünge können entweder axial vorspringen, d. h., dass sie an zwei einander gegenüberliegenden Stirnflächen des Halterings und des Drehrings vorgesehen sind und beim axialen Heranschieben des Drehrings an den Haltering aneinander angreifen. Denkbar ist aber auch, die Vorsprünge radial am Innenumfang des Drehrings bzw. am Außenumfang des Halterings vorspringend zu positionieren. Hierbei werden die Vorsprünge beim Schieben des Drehrings gegen den Haltering quasi ineinander geschoben. Die Vorsprünge und Mitnehmervorsprünge sind grundsätzlich bevorzugt äquidistant verteilt angeordnet, um einen gleichmäßigen Eingriff und eine gleichmäßige Kraftverteilung zu erwirken.

Wie beschrieben ist der Drehring bevorzugt unverlierbar am Haltering angeordnet und mit leichtem Axialspiel relativ zum Haltering gelagert. Damit der Drehring stets in der nicht bewegungsgekoppelten, also "ausgerückten" Stellung entfernt vom Haltering ist, sieht eine zweckmäßige Weiterbildung die Anordnung wenigstens eines beim Drücken des Drehring deformierbaren, eine Rückstellkraft aufbauenden elastischen Bauteils, insbesondere eines Feder- oder Gummirings, zwischen Drehring und Haltering vor, wobei dieses Bauteil ein separates Bauteil sein kann, oder unmittelbar am Drehring oder am Haltering angeformt oder befestigt sein kann. Ein separates Bauteil kann wie beschrieben beispielsweise ein Gummiring oder ein Schaumstoffring oder ein metallischer Federring sein, ein angeformtes Bauteil beispielsweise ein Gummi- oder E-lastomerbelag wie auch eine dünne Federlippe oder Ähnlichem bei Ausführung des Halte- oder Drehrings aus Kunststoff.

### 1.5 Kurze Beschreibung der Zeichnung

Ein Ausführungsbeispiel der Erfindung ist in der Zeichnung dargestellt und wird im Folgenden näher beschrieben. Es zeigen:
- Figur 1: eine Explosionsansicht einer erfindungsgemäßen Ausrücklageranord-nung im Schnitt;
- Figur 2: eine Teilansicht der montierten Ausrücklageranordnung aus Figur 1;
- Figur 3: eine Schnittansicht des Halterings;
- Figur 4 und 5: vergrößerte Detailansichten des Halterings aus Figur 3;
- Figur 6: eine Perspektivdarstellung des Halterings aus Figur 3;
- Figur 7: eine Schnittansicht des Drehrings;
- Figur 8: eine Perspektivansicht des Drehrings aus Figur 7;
- Figur 9: eine Teilansicht einer erfindungsgemäßen Ausrücklageranordnung einer weiteren Ausführungsform im Schnitt;
- Figur 10: eine Teilansicht einer erfindungsgemäßen Ausrücklageranordnung einer weiteren Ausführungsform im Schnitt;
- Figur 11: eine Teilansicht einer erfindungsgemäßen Ausrücklageranordnung einer weiteren Ausführungsform im Schnitt.

### 1.6 Ausführliche Beschreibung der Zeichnung

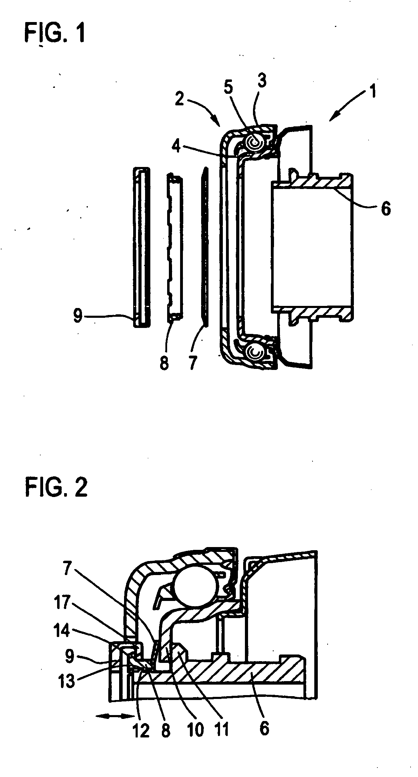

Figur 1 zeigt eine erfindungsgemäße Ausrücklageranordnung 1 in einer Explosionsansicht. Gezeigt ist ein Ausrücklager 2 umfassend einen Außenring 3 sowie einen Innenring 4, zwischen welchen Kugeln 5 angeordnet sind. Vorgesehen ist ferner ein Befestigungsring 6, der als Kolben dient und über ein hydraulisches Bewegungsmittel in der Montagestellung axial bewegbar ist, um das Ausrücklager 2, an dem die Kupplungsdruckplatte anliegt, axial zu verschieben.

Figur 1 zeigt ferner ein Federelement 7 in Form eines Federrings, das zum Verspannen des Innenrings 4 in der Montagestellung dient, worauf nachfolgend noch eingegangen wird. Vorgesehen ist weiterhin ein Haltering 8, der zur Befestigung des Innenrings 4 am Befestigungsring 6 dient, sowie ein Drehring 9, über den der Haltering 8 bewegt wird.

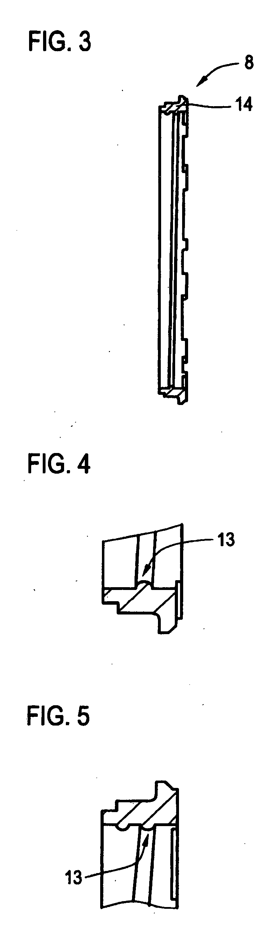

Figur 2 zeigt eine Teilansicht der montierten Ausrücklageranordnung 1 aus Fig. 1. Hierzu wird zunächst das Ausrücklager 2 auf den Befestigungsring 6 aufgeschoben. Der Innenring 4 weist einen radial nach innen gerichteten Flansch 10 auf, der gegen einen radial nach außen vorspringenden Anschlagflansch 11 des Befestigungsrings 6 anliegt. Sodann wird das Federelement 7 aufgeschoben, wonach der Haltering 8 befestigt wird. Hierzu ist es erforderlich, den Haltering 8 relativ zum feststehenden Befestigungsring 6 zu verdrehen. Diese Drehbewegung wird über den Drehring 9 ermöglicht, der mit dem Haltering 8 unverlierbar verbunden ist, jedoch relativ zu diesem axial beweglich ist. Hierzu hintergreift der Drehring 9 den Haltering 8 randseitig, ist an diesem also verrastet. Zwischen beiden ist ein gewisses Axialspiel gegeben, das es ermöglicht, den Drehring 9 relativ zum Haltering 8 axial zu bewegen, wie durch den Doppelpfeil in Figur 2 dargestellt ist. In der entfernten Position ist keine mechanische Drehverbindung zwischen Drehring 9 und Haltering 8 gegeben, d. h., der Drehring 9 würde leer drehen. Ist der Drehring 9 jedoch gegen den Haltering 8 gedrückt, so wird eine mechanische Bewegungskopplung erreicht, die ein Verdrehen des Halterings bei Drehen des Drehrings 9 ermöglicht. Hierauf wird nachfolgend unter Bezugnahme auf die Figuren 3 - 8 noch näher eingegangen.

Zur Befestigung des Halterings 8 am Befestigungsring 6 weist der Befestigungsring 6 ein Außengewinde 12 auf, während der Haltering 8 ein Innengewinde 13 aufweist. D. h., dass der Haltering 8 auf den Befestigungsring 6 aufgeschraubt wird, welche Schraubbewegung durch die Bewegungskopplung des Halterings 8 mit dem Drehring 9 ermöglicht wird. In der Montagestellung gemäß Fig. 2 liegt der Haltering 8 am Federelement 7 an und drückt dieses gegen den Flansch 10 des Innenrings 4, so dass dieser gegen den Anschlagflansch 11 des Befestigungsrings 6 gespannt ist.

Fig. 3 zeigt in einer vergrößerten Ansicht den Haltering 8. Am Innenumfang des Halterings ist das Innengewinde 13 gezeigt, das mit dem Außengewinde 12 des Befestigungsrings 6 zusammenwirkt. Ersichtlich sind letztlich nur zwei Gewindegänge realisiert, dies ist ausreichend, um den Haltering 8 axial festzulegen.

Vorgesehen ist ferner ein radial nach außen abstehender Rastflansch 14, hinter dem ein entsprechender Rastabschnitt des Drehrings 9 eingreift, worauf nachfolgend noch eingegangen wird.

Weiterhin sind an der Stirnseite 15, die in der Montagestellung dem Drehring 9 gegenüberliegt, mehrere axial ausgerichtete Mitnehmervorsprünge 16 vorgesehen. Diese dienen zum Zusammenwirken mit entsprechenden Vorsprüngen am Drehring 9.

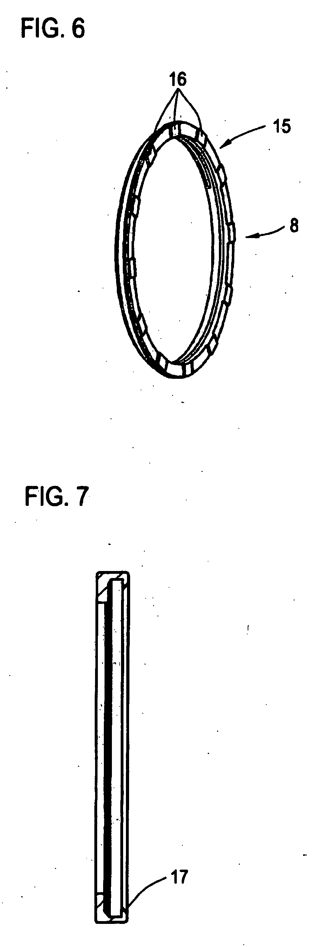

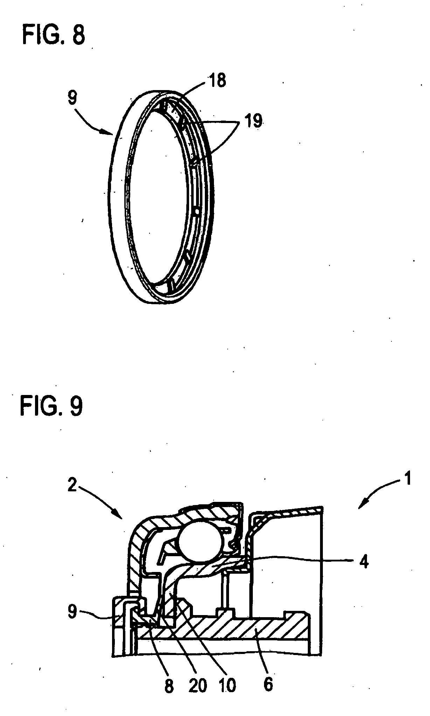

Der Drehring 9 ist detaillierter in den Figuren 7 und 8 dargestellt. Figur 7 zeigt einen den umlaufenden Rastflansch 17 des Drehrings, der mit einer Fase versehen ist, so dass er über den Rastflansch 14 des Halterings, der ebenfalls mit einer leichten Fase versehen ist, geschnappt werden kann und sich der in Figur 2 gezeigte Hintergriff, der jedoch das leichte Axialspiel hat, ergibt.

Wie der Perspektivansicht in Figur 8 zu entnehmen ist, sind an der Stirnseite 18 des Drehrings 9 mehrere Vorsprünge 19 vorgesehen, die wie auch die Mitnehmervorsprünge 15 am Haltering 8 äquidistant verteilt angeordnet sind. Liegen die Stirnflächen 15 und 18 aneinander, ist also der Drehring 9 gegen den Haltering 8 gedrückt, so greifen die Vorsprünge 19 zwischen die Mitnehmervorsprünge 15. Nach Verdrehen des Drehrings 9 um einen gewissen Drehwinkel kommt es zu einem Anschlagen der Vorsprünge 19 an den Mitnehmervorsprüngen 15. Bei weiterer Verdrehung erfolgt die Mitnahme des Halterings 8, so dass dieser auf den Befestigungsring 6 aufgeschraubt werden kann. Hierbei wird das Federelement 7 deformiert und der Innenring 4 gegen den Anschlagflansch 11 verspannt, worüber gleichzeitig auch der Haltering 8 axial verspannt und damit festgelegt wird.

Nach Entlasten des Drehrings 9 gerät dieser wieder außer Eingriff am Haltering 8, so dass die Bewegungskopplung aufgehoben ist. Ist eine Demontage erforderlich, so ist lediglich der Drehring 9 wieder gegen den Haltering 8 zu drücken und zu verdrehen, bis die Vorsprünge 19 wieder in Eingriff mit den Mitnehmervorsprüngen 15 geraten und der Haltering 8 abgeschraubt werden kann.

Figur 9 zeigt eine Teilansicht einer erfindungsgemäßen Ausrücklageranordnung, die, was die Befestigung des Ausrücklagers 2 am Befestigungsring 6 angeht, der Ausführungsform der vorstehenden Figuren entspricht, also ebenfalls über einen Haltering 8 nebst Drehring 9 erfolgt. Hier ist jedoch kein separates Federelement 7 vorgesehen, das die Selbstzentrierung vornimmt, vielmehr ist hier am Haltering 8 ein elastisches Bauteil in Form eines federnden Flansches 20 angeformt, das die Funktion des Federelements 7 ersetzt und gegen den Flansch 10 des Innenrings 4 angefedert ist.

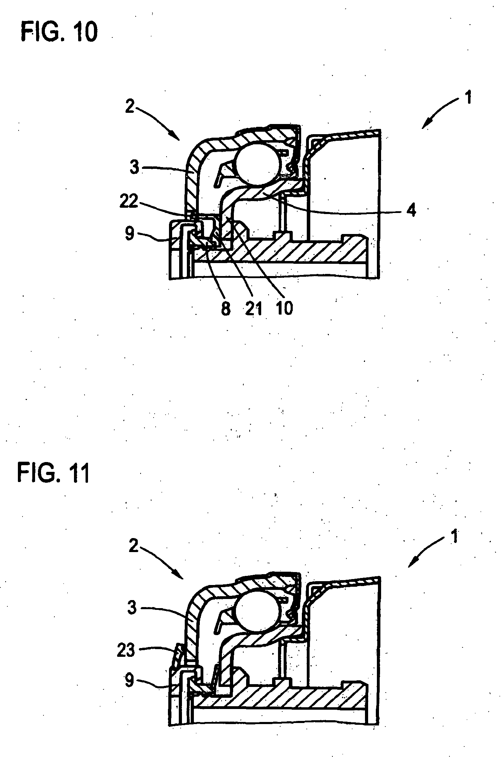

Bei der Ausführungsform gemäß Figur 10, die, was die Befestigung des Ausrücklagers 2 am Befestigungsring angeht, ebenfalls den vorbeschriebenen Ausführungsformen entspricht und einen Haltering und einen Drehring 9 aufweist, ist anstelle eines separaten Federrings ein Gummiring 21 vorgesehen, der am Haltering 8 anliegt respektive von diesem gegen den Flansch 10 des Innenrings 4 gedrückt wird. Der Gummiring 21 hat gleichzeitig einen flanschartigen Dichtabschnitt 22, über den er radial abdichtend am Außenring 3 anliegt.

Figur 11 zeigt schließlich eine Ausführungsform einer Ausrücklageranordnung 1, die insoweit der Anordnung gemäß Figur 2 entspricht. Zusätzlich ist hier jedoch ein Dichtring 23 am Drehring 9 vorgesehen, der in diesem Fall axial abdichtend am Außenring 3 des Ausrücklagers 2 anliegt.

### Bezugszahlenliste

- 1: Ausrücklageranordnung
- 2: Ausrücklager
- 3: Außenring
- 4: Innenring
- 5: Kugel
- 6: Befestigungsring
- 7: Federelement
- 8: Haltering
- 9: Drehring
- 10: Flansch
- 11: Anschlagflansch
- 12: Außengewinde
- 13: Innengewinde
- 14: Rastflansch
- 15: Stirnseite
- 16: Mitnehmervorsprünge
- 17: Rastflansch
- 18: Stirnseite
- 19: Vorsprung
- 20: Flansch
- 21: Gummiring
- 22: Dichtabschnitt
- 23: Dichtring

## Patentansprüche

1. Ausrücklageranordnung für eine hydraulisch betätigbare Kupplung, umfassend ein Ausrücklager mit einem Innenring, der mittels eines an einem Befestigungsring fixierten Halterings an dem Befestigungsring gegen die Wirkung eines zwischen Hältering und Innenring angeordneten Federrings (7) verspannt ist, **dadurch gekennzeichnet, dass** der Haltering (8) durch Drehen in eine am Befestigungsring (6) axial bewegungsgesicherte Position bringbar ist.

2. Ausrücklageranordnung nach Anspruch 1, **dadurch gekennzeichnet, dass** am Befestigungsring (6) ein Außengewinde (12) vorgesehen ist, auf das der Haltering (8) mit einem Innengewinde (13) aufschraubbar ist.

3. Ausrücklageranordnung nach Anspruch 1, **dadurch gekennzeichnet, dass** am Befestigungsring (6) mehrer umfangsmäßig voneinander beabstandete radial nach außen ragende Vorsprünge vorgesehen sind, die von mehreren am Haltering (8) vorgesehenen umfangsmäßig voneinander beabstandeten und radial nach innen ragenden Vorsprüngen beim Drehen hintergriffen werden.

4. Ausrücklageranordnung nach einem der vorangehenden Ansprüche, **dadurch gekennzeichnet, dass** zwischen dem Haltering (8) und dem Innenring (4) ein Spannelement (7, 21), insbesondere ein Feder- oder Gummiring angeordnet ist, oder dass ein Spannelement (20), insbesondere ein Federflansch, am Haltering (8) angeformt ist, der am Innenring angreift.

5. Ausrücklageranordnung nach einem der vorangehenden Ansprüche, **dadurch gekennzeichnet, dass** ein dem Haltering (8) zugeordneter Drehring (9) vorgesehen ist, der mit dem Haltering (8) zum Drehen desselben zumindest temporär bewegungskoppelbar ist.

6. Ausrücklageranordnung nach Anspruch 5, **dadurch gekennzeichnet, dass** der Drehring (9) den Haltering (8) außenseitig über- und zur Fixierung mit Axialspiel hintergreift.

7. Ausrücklageranordnung nach Anspruch 6, **dadurch gekennzeichnet, dass** zwischen dem Drehring (9) und dem Haltering (8) wenigstens ein beim Drücken des Drehrings (9) deformierbares, eine Rückstellkraft aufbauendes elastisches Bauteil, insbesondere ein Feder- oder Gummiring, angeordnet oder ein solches Bauteil am Drehring (9) oder dem Haltering (8) angeformt oder befestigt ist.

8. Ausrücklageranordnung nach einem der Ansprüche 5 bis 7, **dadurch gekennzeichnet, dass** am Drehring (9) mehrere Vorsprünge (19) vorgesehen sind, die zum Drehen durch Drücken des Drehrings (9) gegen den Haltering (8) lösbar in Eingriff mit am Haltering (8) vorgesehenen Mitnehmervorsprüngen (16) bringbar sind.

9. Ausrücklageranordnung nach Anspruch 8, **dadurch gekennzeichnet, dass** die Vorsprünge (19) und die Mitnehmervorsprünge (16) axial vorspringen oder radial am Innenumfang des Drehrings (9) bzw. am Außenumfang des Halterings (8) vorspringen.

10. Ausrücklageranordnung nach Anspruch 8 oder 9, **dadurch gekennzeichnet, dass** die Vorsprünge (19) und die Mitnehmervorsprünge (16) jeweils äquidistant verteilt angeordnet sind.

## Claims

1. Release bearing arrangement for a hydraulically actuable clutch, comprising a release bearing with an inner ring which is braced on a fastening ring by means of a retaining ring which is fixed on the fastening ring, counter to the action of a spring ring (7) which is arranged between the retaining ring and the inner ring, **characterized in that** the retaining ring (8) can be moved by way of rotation into a position which is secured against axial movement on the fastening ring (6).

2. Release bearing arrangement according to Claim 1, **characterized in that** an external thread (12) is provided on the fastening ring (6), onto which external thread (12) the retaining ring (8) can be screwed by way of an internal thread (13).

3. Release bearing arrangement according to Claim 1, **characterized in that** a plurality of radially outwardly protruding projections which are spaced apart from one another circumferentially are provided on the fastening ring (6), which projections are engaged behind by a plurality of radially inwardly protruding projections which are provided on the retaining ring (8) and are spaced apart from one another circumferentially.

4. Release bearing arrangement according to one of the preceding claims, **characterized in that** a clamping element (7, 21), in particular a spring or rubber ring, is arranged between the retaining ring (8) and the inner ring (4), or **in that** a clamping element (20), in particular a tongue flange, is integrally formed on the retaining ring (8) which acts on the inner ring.

5. Release bearing arrangement according to one of the preceding claims, **characterized in that** a rotating ring (9) is provided which is assigned to the retaining ring (8) and can be coupled in terms of movement at least temporarily to the retaining ring (8) in order to rotate the latter.

6. Release bearing arrangement according to Claim 5, **characterized in that** the rotating ring (9) engages over the retaining ring (8) on the outer side and engages behind it for fixing purposes with axial play.

7. Release bearing arrangement according to Claim 6, **characterized in that** at least one elastic component, in particular a spring or rubber ring, which can be deformed during pressing of the rotating ring (9) and builds up a restoring force is arranged between the rotating ring (9) and the retaining ring (8), or a component of this type is formed integrally on or is fastened to the rotating ring (9) or the retaining ring (8).

8. Release bearing arrangement according to one of Claims 5 to 7, **characterized in that** a plurality of projections (19) are provided on the rotating ring (9), which projections (19) can be brought releasably into engagement with driver projections (16) which are provided on the retaining ring (8) for rotating by way of pressing of the rotating ring (9) against the retaining ring (8).

9. Release bearing arrangement according to Claim 8, **characterized in that** the projections (19) and the driver projections (16) protrude axially or protrude radially on the inner circumference of the rotating ring (9) and on the outer circumference of the retaining ring (8), respectively.

10. Release bearing arrangement according to Claim 8 or 9, **characterized in that** the projections (19) and the driver projections (16) are arranged in each case in an equidistantly distributed manner.

## Revendications

1. Agencement de butée de débrayage pour un embrayage pouvant être actionné hydrauliquement, comportant une butée de débrayage pourvue d'une bague intérieure qui est serrée, au moyen d'une bague de retenue fixée sur une bague de fixation, sur la bague de fixation à l'encontre de l'action d'une bague élastique (7) disposée entre la bague de retenue et la bague intérieure, **caractérisé en ce que** la bague de retenue (8) peut être amenée par rotation à une position bloquée en déplacement axialement sur la bague de fixation (6).

2. Agencement de butée de débrayage selon la revendication 1, **caractérisé en ce qu'**un filetage extérieur (12) est prévu sur la bague de fixation (6), sur lequel peut être vissée la bague de retenue (8) pourvue d'un filetage intérieur (13).

3. Agencement de butée de débrayage selon la revendication 1, **caractérisé en ce que** plusieurs saillies espacées les unes des autres circonférentiellement et faisant saillie radialement vers l'extérieur sont prévues sur la bague de fixation (6), avec lesquelles saillies viennent en prise par l'arrière, lors de la rotation, plusieurs saillies prévues sur la bague de retenue (8), espacées les unes des autres circonférentiellement et faisant saillie radialement vers l'intérieur.

4. Agencement de butée de débrayage selon l'une quelconque des revendications précédentes, **caractérisé en ce qu'**un élément de serrage (7, 21), en particulier une bague élastique ou en caoutchouc, est disposé entre la bague de retenue (8) et la bague intérieure (4), ou **en ce qu'**un élément de serrage (20), en particulier une bride élastique, est formé sur la bague de retenue (8), laquelle bride élastique agit sur la bague intérieure.

5. Agencement de butée de débrayage selon l'une quelconque des revendications précédentes, **caractérisé en ce qu'**une bague rotative (9) associée à la bague de retenue (8) est prévue, laquelle bague rotative peut être accouplée en déplacement au moins temporairement à la bague de retenue (8) en vue de la rotation de celle-ci.

6. Agencement de butée de débrayage selon la revendication 5, **caractérisé en ce que** la bague rotative (9) vient en prise par le dessus avec la bague de retenue (8) du côté extérieur et vient en prise par l'arrière avec celle-ci en vue de la fixation avec jeu axial.

7. Agencement de butée de débrayage selon la revendication 6, **caractérisé en ce qu'**au moins un composant élastique, en particulier une bague élastique ou en caoutchouc, déformable lors du pressage de la bague rotative (9) et établissant une force de rappel est disposé entre la bague rotative (9) et la bague de retenue (8) ou un tel composant est formé ou fixé sur la bague rotative (9) ou sur la bague de retenue (8).

8. Agencement de butée de débrayage selon l'une quelconque des revendications 5 à 7, **caractérisé en ce que** plusieurs saillies (19) sont prévues sur la bague rotative (9), lesquelles peuvent être amenées en prise de manière amovible avec des saillies d'entraînement (16) prévues sur la bague de retenue (8) en vue de la rotation par pressage de la bague rotative (9) contre la bague de retenue (8).

9. Agencement de butée de débrayage selon la revendication 8, **caractérisé en ce que** les saillies (19) et les saillies d'entraînement (16) font saillie axialement ou font saillie radialement sur la périphérie intérieure de la bague rotative (9) ou sur la périphérie extérieure de la bague de retenue (8).

10. Agencement de butée de débrayage selon la revendication 8 ou 9, **caractérisé en ce que** les saillies (19) et les saillies d'entraînement (16) sont respectivement disposées de manière répartie de façon équidistante.
